# EUROPEAN PATENT SPECIFICATION

(11) **EP 3 255 696 B1**
(45) Date of publication and mention of the grant of the patent: **14.08.2019**
(21) Application number: 17150996.1
(22) Date of filing: 11.01.2017
(51) Int. Cl.: H01M 2/04, H01M 2/34

(54) **TOP COVER OF POWER BATTERY AND POWER BATTERY**
ABDECKUNG EINER STROMBATTERIE SOWIE STROMBATTERIE
COUVERCLE SUPÉRIEUR D'UNE BATTERIE D'ALIMENTATION ET BATTERIE D'ALIMENTATION

(30) Priority: 07.06.2016 CN 201610399621
(43) Date of publication of application: 13.12.2017
(73) Proprietor: Contemporary Amperex Technology Co., Limited, Jiaocheng District Ningde City Fujian 352100 (CN)
(72) Inventor: LI, Quankun, Ningde City, Fujian 352100 (CN); ZHU, Lingbo, Ningde City, Fujian 352100 (CN); GUO, Jian, Ningde City, Fujian 352100 (CN); DENG, Pinghua, Ningde City, Fujian 352100 (CN); WANG, Peng, Ningde City, Fujian 352100 (CN)
(74) Representative: Ter Meer Steinmeister & Partner

(56) References cited:
- CN-U- 202 094 198
- US-A1- 2015 171 411
- US-A1- 2015 188 119

## Description

### TECHNICAL FIELD

The present application relates to the field of Li-ion battery production technologies and, particularly, relates to a top cover of a power battery and the power battery.

### BACKGROUND

In order to solve the over-charging problem of the EV hard shell battery, a general solution adopted in the industry is to cut off the main circuit before the cell loses efficacy, prevent the battery from being charged continuously so as to ensure the safety of the battery.

At present, for a square shaped hard shell battery, a circuit interrupting device (CID) may be adopted. That is, the positive-pole main circuit includes an air pressure deformable plate and a conductive plate which is integrated with the CID as a whole. The periphery of the conductive plate is connected with a naked cell electrode tab through welding, the CID portion of the conductive plate is connected with the deformable plate as a whole through welding, and the deformable plate is connected with a positive pole column through welding so as to conduct a circuit to a positive pole terminal.

When a battery is over charged, the internal air pressure is increased, the deformable plate is turned thus tearing the CID, so that the deformable plate is cut off from the conductive plate.

Theoretically, as long as a certain gap exists between the conductive plate and the deformable plate or the positive pole column connected with the deformable plate, the main circuit can be cut off after the CID is torn. However, as mentioned above, the conductive plate is integrated with the CID as a whole, and is then fixed with the deformable plate through welding, and the bottom periphery of the conductive plate needs to be welded with a naked cell electrode tab.

As we known, a certain air pressure is needed to push the deformable plate to tear the CID, both the deformable plate and the CID cannot be made too strong. Relatively speaking, it is preferred to be a little bit weaker. Thus, the conductive plate integrated with the CID as a whole is connected with the deformable plate at the top, and is connected with the naked cell electrode tab at the bottom, if there is no other component for auxiliary fixing, it is easy to be broken and loses efficacy during the process of normal assembling and using, or the conductive plate is conductively connected with the deformable plate or the top cover plate after being deformed.

CN 202 094 198 U discloses an anode explosion-proof device for a lithium-ion power battery. The explosion-proof device includes a sealing cover plate (1), a top cover (2), an explosion-proof membrane (4) and a power-off protection pore plate (5). The sealing cover plate (1) has a circular ring structure. The middle of the sealing cover plate (1) is provided with an annular cover plate step (13) which contributes to welding. The top cover (2) is positioned on the sealing cover plate (1), and is provided with an air leakage hole. A convex edge (11) is inwardly formed on an outer annular platform of the top cover (2). The explosion-proof membrane (4) is connected with the sealing cover plate and the top cover, has a straight edge structure, and is provided with an annular notch (12). The power-off protection pore plate (5) is positioned on the explosion-proof membrane (4). The insulation washer (3) positioned on the explosion-proof membrane is provided with upper and lower salient points for locking the sealing cover plate (1) and the power-off protection pore plate (5).

In view of the above, it is necessary to design a conductive plate fixing structure integrated with a CID as a whole, which achieves the effect of fixing and insulation and, at the same time, increases the utilization space of the interior of the battery as much as possible.

### SUMMARY

The present application provides a top cover plate of a power battery and the power battery, which can firmly fix a conductive plate without occupying too much interior space of the power battery.

A first aspect of the present application provides a top cover plate of a power battery, including:
a top cover plate, a first electrode unit and a second electrode unit,
the top cover plate is provided with a deformable plate connecting hole and a first connecting portion integrated with the top cover plate as a whole,
the first electrode unit includes a deformable plate, a conductive plate and an insulation piece, the insulation piece is provided with a second connecting portion and a conductive plate connecting portion,
the deformable plate seals the deformable plate connecting hole, the conductive plate is located underneath the deformable plate, and is electrically connected with the deformable plate,
the first connecting portion protrudes from a lower surface of the top cover plate, the insulation piece is fixed underneath the top cover plate through a cooperation of the first connecting portion and the second connecting portion,
the conductive plate is insulated from and fixed with the top cover plate through the conductive plate connecting portion,
the second connecting portion is a through-hole and the first connecting portion clamps the through-hole,
wherein the through-hole is a ladder hole with a top diameter smaller than a bottom diameter and wherein
the first connecting portion is a rivet, the rivet passes through the through-hole and is fixed with the through-hole through riveting.

Preferably, the conductive plate connecting portion is a clamping slot, an edge of the conductive plate is clamped in the clamping slot.

A second aspect of the present application provides a power battery, including the top cover plate of the power battery as described above.

The technical solution provided by the present application can reach the following beneficial effect:
The power battery provided by the present application can achieve a fix connection between the top cover plate and the insulation sheet through improving the structures thereof, at the same time, achieve fix connection between the conductive plate and the insulation piece, so as to prevent the conductive plate from breaking and losing efficacy caused by self-displacement during normal assembling and using process, furthermore, such connection structure occupies a smaller interior space of the power battery.

It should be understood that, the above general description and the following detailed description are just exemplary, which cannot limit the present application.

### BRIEF DESCRIPTION OF DRAWINGS

FIG. 1 is a lateral sectional diagram of a whole top cover of a power battery provided by an embodiment of the present application;
FIG. 2 is partial enlarged structural schematic diagram of a first specific structure of a top cover of a power battery corresponding to portion A of FIG. 1 provided by an embodiment;
FIG. 3 is partial enlarged structural schematic diagram of a second specific structure of a top cover of a power battery corresponding to portion A of FIG. 1;
FIG. 4 is partial enlarged structural schematic diagram of a third specific structure of a top cover of a power battery corresponding to portion A of FIG. 1; and
FIG. 5 is partial enlarged structural schematic diagram of a fourth specific structure of a top cover of a power battery corresponding to portion A of FIG. 1.

### Reference Signs

- 10: - top cover plate;
100 - first connecting portion;
101 - deformable plate connecting hole;
- 20: - first electrode unit;
200 - deformable plate;
201 - conductive plate;
202 - insulation piece;
202a - second connecting portion;
202b - conductive plate connecting portion;
- 30: - second electrode unit.

These drawings are incorporated into the specification and form a part of the specification, which show embodiments of the present application, and illustrate the principle of the present application together with the specification.

### DESCRIPTION OF EMBODIMENTS

The present application will be described in further detail through specific embodiments and the accompanying drawings. The "front", "back", "left", "right", "up", "down" are referring to the placing states of a top cover of a power battery and the power battery in the drawings.

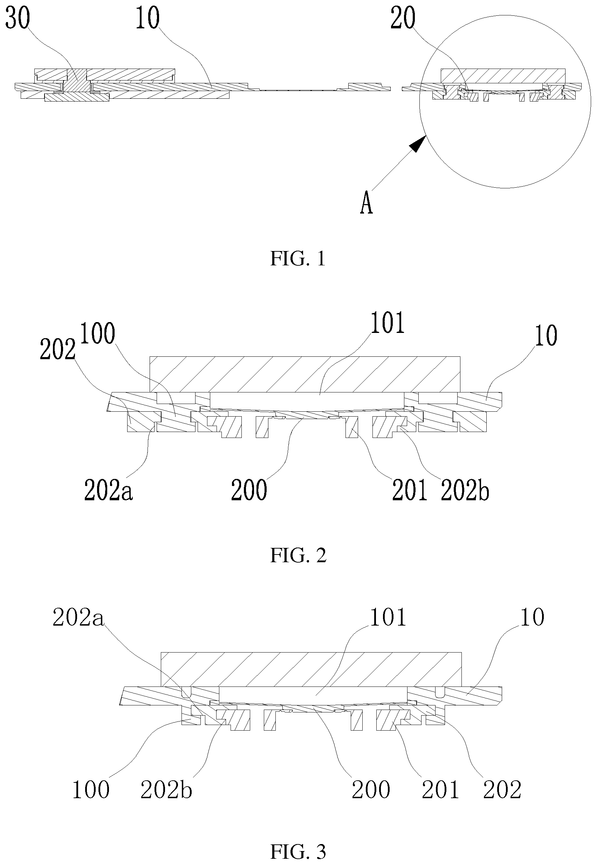

As shown in FIG. 1, an embodiment of the present application provides a top cover of a power battery, including a top cover plate 10, a first electrode unit 20 and a second electrode unit 30. The top cover plate 10 is a main structure of the top cover, which needs to be made adopting conductive materials, such as aluminum sheet. A first connecting portion 100 and a deformable plate connecting hole 101 are provided on the top cover plate 10. The first electrode unit 20 and the second electrode unit 30 are respectively two output poles of the power battery, each output pole is electrically connected with an electrode tab of a naked cell respectively. In the present embodiment, generally, the first electrode unit 20 can be the positive pole of the power battery, and the second electrode unit 30 can be the negative pole of the power battery.

As shown in FIG. 2, in the present embodiment, the second electrode unit 30 is insulated from and connected with the top cover plate. The first electrode unit 20 includes a deformable plate 200, a conductive plate 201 and an insulation piece 202. The deformable plate 200 seals and fixes the deformable plate connecting hole 101, the conductive plate 201 is located underneath the deformable plate 200, and is electrically connected with the deformable plate 200, the manner of electrical connection is that the middle portion of the deformable plate 200 is fixedly connected with the CID on the conductive plate 201 through welding or other manners.

The deformable plate 200 can turn and separate from the electrical connection status with the conductive plate 201 when the pressure in the interior of the power battery exceeds a reference pressure.

The deformable plate 200 seals and fixes the deformable plate connecting hole 101, the periphery of the deformable plate 200 can be welded at the top or bottom of the deformable plate connecting hole 101 (as shown in FIG. 1), as long as the deformable plate connecting hole 101 can be sealed. Absolutely, the deformable plate can also be integrated with the top cover plate as a whole, that is, the top cover plate punches a deformable plate at the deformable plate connecting hole, the deformable plate can be located at the top or bottom of the deformable plate connecting hole 101.

In the present embodiment, the connection between the insulation piece 202 and the top cover plate 10 as well as the conductive plate 201 is extremely important, which plays a significant role to the stability of the conductive plate 201. Specifically, the second connecting portion 202a and a conductive plate connecting portion 202b are arranged on the insulation piece 202, the first connecting portion 100 is integrated with the top cover plate 10 as a whole through a processing manner such as punching, die-casting and so on, the insulation piece 202 is fixed underneath the top cover plate 10 through the cooperation of the first connecting portion 100 and the second connecting portion 202a, the conductive plate 201 is fixedly connected with the conductive plate connecting portion 202b.

Through this structure, the top cover plate 10 can be fixedly connected with the insulation piece 202, meanwhile the conductive plate 201 is also fixedly connected with the insulation piece 202, so as to prevent the conductive plate 201 from breaking and losing efficacy caused by self-displacement during normal assembling and using process, furthermore, such connection structure occupies a smaller interior space of the power battery.

In the present embodiment, as shown in FIG. 2, the top cover plate 10 is formed with the first connecting portion 100 as a whole by punching or other manners. This manner has advantage of simple processing and high production efficiency.

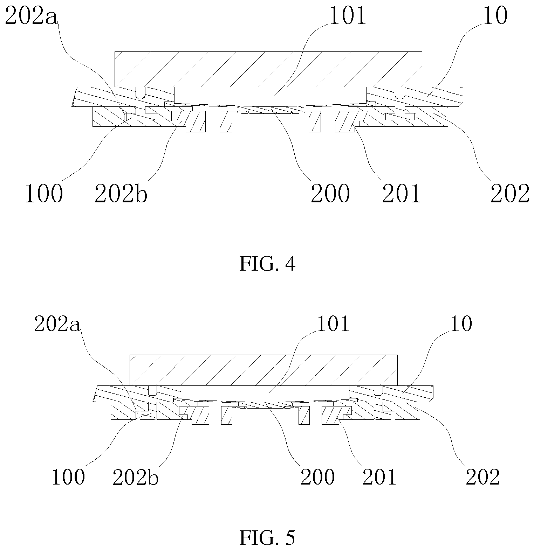

Alternatively, a clamping block can be arranged at an end of the first connecting portion 100 away from the top cover plate 10, the second connecting portion 202a can be clamped and fixed through the clamping block. Specifically, as shown in FIG. 3, a sheet shaped first connecting portion 100 can be adopted, the second connecting portion 202a can be arranged at an edge of the insulation piece 202, during assembling, the first connecting portion 100 is located at the periphery of the insulation piece 202, then the first connecting portion 100 can be bended to form a clamping block extending toward the horizontal direction, the clamping block extends to the underneath of the second connecting portion 202a, so as to clamp the insulation piece 202. At this time, it is unnecessary to require the shape of the second connecting portion 202a, as long as it can be clamped by the first connecting portion 100. However, a preferred manner is that the second connecting portion 202a is designed to be a clamping recess, the depth and width of the clamping recess is substantially corresponding to the size of the clamping block, so that the clamping recess can completely accommodate the clamping block. However, in yet another alternative configuration, the second connecting portion 202a can also be of a slot shape (referring to FIG. 4).

Besides, the second connecting portion 202a can also be designed as a bar-type hole, so that the clamping block can clamp the bar-type hole, in the section of the bar-type hole perpendicular to the length direction thereof, the size of the lower portion needs to be larger than the size of the upper portion (referring to FIG. 5).

As shown in FIG. 2, in the present embodiment, the second connecting portion 202a can also adopt a through-hole, after the first connecting portion 100 passes through the second connecting portion 202a, the underneath thereof can clamp the through-hole, so as to prevent the insulation piece 202 from moving. In order to reduce the occupation of the interior space of the power battery, the second connecting portion 202a can adopt a ladder hole with top diameter smaller than bottom diameter, thus, the portion of the first connecting portion 100 used for clamping the second connecting portion 202a can be located in the interior of the insulation piece 202, which will not occupy more space of the power battery due to protruding from the insulation piece 202. In the above situation, the first connecting portion 100 can adopt a rivet, after the rivet passes through the second connecting portion 202a, the head of the rivet will be riveted to be flat through a rivet pressing manner, so as to clamp the second connecting portion 202a.

In the present embodiment, the conductive plate 201 is insulated from and fixed with the top cover plate 10 through the conductive plate connecting portion 202b. In order to facilitate the connection, the conductive plate connecting portion 202b can be arranged as a slot, the edge of the conductive plate 201 can be clamped in the slot. Thus, the conductive plate 201 can be firmly fixed on the top cover plate 10 through the insulation piece, so as to prevent the conductive plate 201 from breaking and losing efficacy caused by self-displacement during normal assembling and using process.

The present application also provides a power battery, by adopting the top cover of the power battery, which can effectively prevent the malfunctions caused by the broken, losing efficacy or deformation of the conductive plate during using process, at the same time, can also have a larger interior space.

The above are just the preferred embodiments of the present application, which will not limit the present application, for those skilled in the art, the present application can have various modifications and equivalent replacements. Any modifications, equivalent replacements and improvements made within the principles of the present application shall all fall in the protection scope of the present application.

## Claims

1. A top cover of a power battery, **characterized in that**, comprising a top cover plate, a first electrode unit and a second electrode unit,
the top cover plate is provided with a deformable plate connecting hole and a first connecting portion integrated with the top cover plate as a whole,
the first electrode unit comprises a deformable plate, a conductive plate and an insulation piece, the insulation piece is provided with a second connecting portion and a conductive plate connecting portion,
the deformable plate seals the deformable plate connecting hole, the conductive plate is located underneath the deformable plate, and is electrically connected with the deformable plate,
the first connecting portion protrudes from a lower surface of the top cover plate, the insulation piece is fixed underneath the top cover plate through a fit of the first connecting portion and the second connecting portion,
the conductive plate is insulated from and fixed with the top cover plate through the conductive plate connecting portion,
the second connecting portion is a through-hole and the first connecting portion clamps the through-hole,
wherein the through-hole is a ladder hole with a top diameter smaller than a bottom diameter and
wherein the first connecting portion is a rivet, the rivet passes through the through-hole and is fixed with the through-hole through riveting.

2. The top cover of the power battery according to claim 1, **characterized in that**, the conductive plate connecting portion is a clamping slot, an edge of the conductive plate is clamped in the clamping slot.

3. A power battery comprising the top cover of the power battery according to claim 1 or 2.

## Patentansprüche

1. Obere Abdeckung einer Leistungsbatterie, **dadurch gekennzeichnet, dass** sie eine obere Abdeckplatte, eine erste Elektrodeneinheit und eine zweite Elektrodeneinheit umfasst,
wobei die obere Abdeckplatte mit einem Verbindungsloch für eine verformbaren Platte und einem ersten Verbindungsabschnitt, der in der oberen Abdeckplatte als Ganzes integriert ist, versehen ist,
wobei die erste Elektrodeneinheit eine verformbare Platte, eine leitende Platte und ein Isolierstück umfasst, wobei das Isolierstück mit einem zweiten Verbindungsabschnitt und einem Verbindungsabschnitt für eine leitende Platte versehen ist,
wobei die verformbare Platte das Verbindungsloch für die verformbare Platte verschließt, wobei die leitende Platte unter der verformbaren Platte angeordnet ist und elektrisch mit der verformbaren Platte verbunden ist,
wobei der erste Verbindungsabschnitt von einer unteren Fläche der oberen Abdeckplatte hervorsteht, wobei das Isolierstück über eine Passung des ersten Verbindungsabschnitts und des zweiten Verbindungsabschnitts unter der oberen Abdeckplatte fixiert ist,
wobei die leitende Platte mittels des Verbindungsabschnitts für die leitende Platte von der oberen Abdeckplatte isoliert und an dieser fixiert ist,
wobei der zweite Verbindungsabschnitt ein Durchgangsloch ist und der erste Verbindungsabschnitt das Durchgangsloch arretiert,
wobei das Durchgangsloch ein Leiterloch mit einem oberen Durchmesser, der kleiner als ein unterer Durchmesser ist, ist, und
wobei der erste Verbindungsabschnitt eine Niete ist, wobei die Niete durch das Durchgangsloch hindurchgeht und mittels Vernietung an dem Durchgangsloch fixiert ist.

2. Obere Abdeckung der Leistungsbatterie nach Anspruch 1, **dadurch gekennzeichnet, dass** der Verbindungsabschnitt für die leitende Platte ein Klemmschlitz ist, wobei ein Rand der leitenden Platte in den Klemmschlitz geklemmt ist.

3. Leistungsbatterie, umfassend die obere Abdeckung der Leistungsbatterie nach Anspruch 1 oder 2.

## Revendications

1. Recouvrement supérieur d'une batterie d'alimentation, **caractérisé en ce que**, comprenant une plaque de recouvrement supérieure, une première unité d'électrode et une seconde unité d'électrode,
la plaque de recouvrement supérieure est munie d'une plaque déformable reliant un trou et une première partie de raccordement intégrée à la plaque de recouvrement supérieure dans son ensemble,
la première unité d'électrode comprend une plaque déformable, une plaque conductrice et une pièce d'isolation, la pièce d'isolation est munie d'une seconde partie de raccordement et d'une partie de raccordement de plaque conductrice,
la plaque déformable rend étanche le trou de raccordement de plaque déformable, la plaque conductrice est située en dessous de la plaque déformable et est reliée de manière électrique à la plaque déformable,
la première partie de raccordement fait saillie à partir d'une surface inférieure de la plaque de recouvrement supérieure, la pièce d'isolation est fixée en dessous de la plaque de recouvrement supérieure grâce à un ajustement de la première partie de raccordement et de la deuxième partie de raccordement,
la plaque conductrice est isolée de la plaque de recouvrement supérieure et fixée à celle-ci grâce à la partie de raccordement de plaque conductrice,
la seconde partie de raccordement est un trou de passage et la première partie de raccordement serre le trou de passage,
dans lequel le trou de passage est un trou d'échelle dont le diamètre supérieur est inférieur au diamètre inférieur et
dans lequel la première partie de raccordement est un rivet, le rivet passe à travers le trou de passage et est fixé au trou de passage par rivetage.

2. Recouvrement supérieur d'une batterie d'alimentation selon la revendication 1, **caractérisée en ce que**, la partie de raccordement de plaque conductrice et une fente de serrage, un bord de la plaque conductrice est serré dans la fente de serrage.

3. Batterie d'alimentation comprenant le recouvrement supérieur de la batterie d'alimentation selon la revendication 1 ou la revendication 2.
